# EUROPÄISCHE PATENTSCHRIFT

(11) **EP 0 627 349 B1**
(45) Veröffentlichungstag und Bekanntmachung des Hinweises auf die Patenterteilung: **06.11.1996**
(21) Anmeldenummer: 94107275.3
(22) Anmeldetag: 10.05.1994
(51) Int. Cl.: B60T 8/36

(54) **Ventilblockaggregat**
Valve block
Ensemble de soupapes

(30) Priorität: 03.06.1993 DE 4318420
(43) Veröffentlichungstag der Anmeldung: 07.12.1994
(73) Patentinhaber: ROBERT BOSCH GMBH, 70442 Stuttgart (DE)
(72) Erfinder: Klinger, Herbert, D-90455 Nuernberg (DE); Zoebl, Hartmut, D-90762 Fuerth (DE); Fassel, Reinhard, D-90522 Oberasbach (DE)

(56) Entgegenhaltungen:
- EP-A- 0 238 801
- WO-A-91/10583
- DE-A- 3 813 138
- US-A- 5 137 455

## Beschreibung

### Stand der Technik

Die Erfindung geht aus von einem Ventilblockaggregat nach der Gattung des Hauptanspruches. Ein derartiges Ventilblockaggregat ist bekannt (DE 38 13 138 A1, US-PS 5 137 455).

Bei solchen Ventilblockaggregaten besteht das Problem, daß vor oder während der Montage eines Ventilblock-Deckels mitsamt an ihm oder in ihm befestigten Schaltmitteln die freistehenden Kontaktstifte, Kontaktmesser oder dergleichen verbogen oder beschädigt werden. Sie finden dann nicht ihr Gegenelement, was zur Folge hat, daß Ventilblockaggregate gar nicht oder nicht ordnungsgemäß montiert werden und deshalb von Anfang an defekt sind.

Durch die EP 0 238 801 A1 ist es zwar bereits bekannt, eine Vorzentrierung einer mehrpoligen Steckverbindung durchzuführen. Eine solche Vorzentrierung allein reicht aber nicht aus für eine sichere Kontaktierung, insbesondere deshalb, weil sie die Kontaktstifte oder Kontaktmesser nicht vor Verbiegen oder Beschädigen schützt.

Der Erfindung liegt die Aufgabe zugrunde, die aufgezeigten Nachteile zu vermeiden und ein Ventilblockaggregat zu schaffen, bei dem die Kontaktstifte oder Kontaktmesser oder dergleichen Kontaktelemente bei noch nicht montiertem bzw. bei demontiertem Ventilblockaggregat vor einem Verbiegen oder Beschädigen geschützt sind. Außerdem soll eine in der Serienfertigung übliche, automatische Montage des Ventilblockaggregates gewährleistet sein.

Diese Aufgabe wird gemäß der Erfindung bei dem eingangs genannten Ventilblockaggregat durch die kennzeichnenden Merkmale des Hauptanspruchs gelöst. Mehrere vorteilhafte Weiterbildungen des Erfindungsgegenstandes ergeben sich aus den kennzeichnenden Merkmalen der Unteransprüche.

### Zeichnung

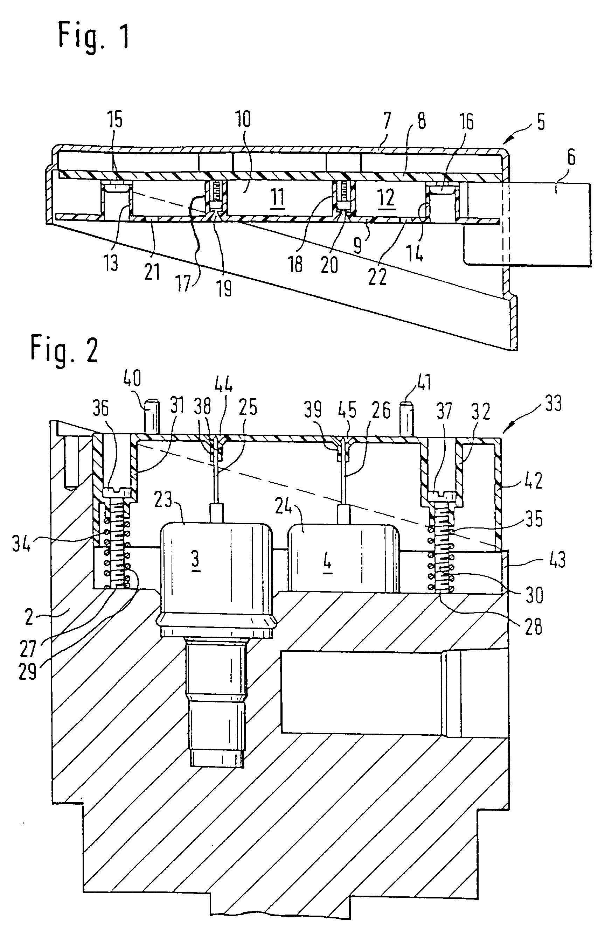

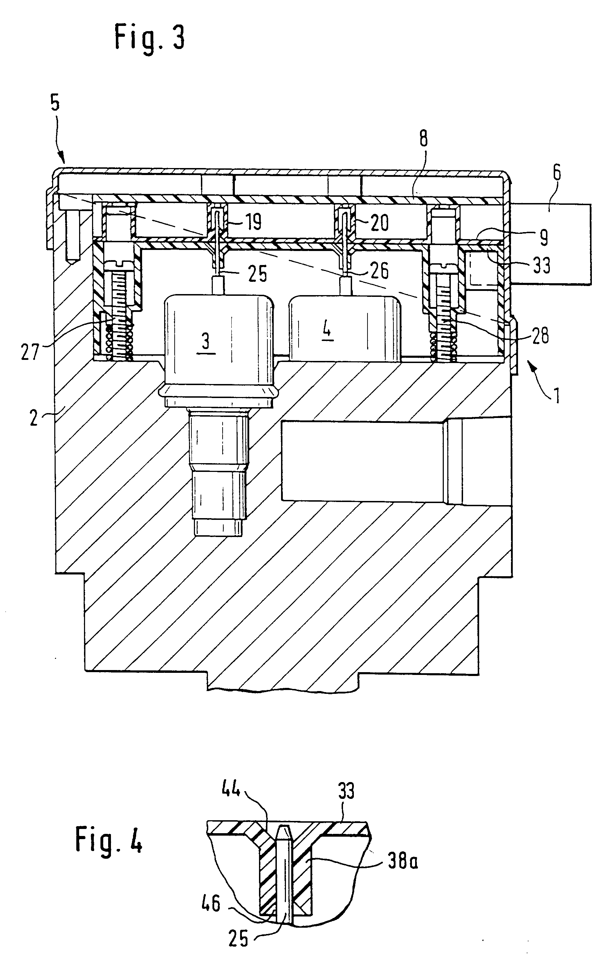

Ein Ausführungsbeispiel der Erfindung ist in der Zeichnung dargestellt und in der nachfolgenden Beschreibung näher erläutert. Es zeigen: Figur 1 ein Schnittbild des Ventilblock-Deckels mit Schaltmitteln, Figur 2 ein Schnittbild des Ventilblockes mit Magnetventilen, beide Darstellungen in demontiertem Zustand des Aggregats, Figur 3 das Ventilblockaggregat im Zustand nach seiner Montage und Figur 4 eine Weiterbildung eines Einzelteils der Figur 2 im Schnittbild.

### Beschreibung des Ausführungsbeispiels

Ein Ventilblockaggregat 1 besteht aus einem Ventilblock 2 für eine Anzahl Magnetventile, von denen in den Figuren 2 und 3 lediglich zwei zu erkennen sind und zwar die Magnetventile 3 und 4, und aus einem Ventilblock-Deckel 5, an dem eine Steckerleiste 6 befestigt ist. Das Ventilblockaggregat 1 ist zur Verwendung in Bremsdruckregelvorrichtungen bestimmt, wie sie bei Antiblockiervorrichtungen (ABS) und/oder bei Antriebsschlupfregelvorrichtungen (ASR) Anwendung finden.

Der Ventilblock-Deckel 5 besteht aus einer Haube 7, in der eine elektrische Leiterplatte 8 und im Abstand darunter ein Bodenstück 9 befestigt sind. Durch den Abstand zwischen der Leiterplatte 8 und dem Bodenstück 9 ist ein Bauraum 10 gebildet, in welchem die Steckerleiste 6 zum Teil und andere, nicht dargestellte elektrische Bauteile 11 und 12 untergebracht sind. Der Abstand zwischen der Leiterplatte 8 und dem Bodenstück 9 wird durch zwei Hohlansätze 13 und 14 des Bodenstückes 9 erreicht, in die je eine Schraube 15 bzw. 16 eingesetzt ist. Mit den Schrauben ist das Bodenstück 9 an der Haube 7 befestigt und die Leiterplatte 8 ist eingeklemmt. Außerdem sind in dem Bauraum 10 noch zwei hohle Bodenstück-Ansätze 17 und 18 zu erkennen, die je eine Kontaktbuchse 19 bzw. 20 schutzgebend übergreifen. Schließlich ist noch zu bemerken, daß das Bodenstück 9 zwei Fixierlöcher 21 und 22 für eine ausgerichtete Zusammenfügung von Deckel 5 und Ventilblock 2 aufweist.

Der in der Figur 2 dargestellte Ventilblock 2 beinhaltet eine Anzahl Magnetventile, von denen - wie bereits ausgeführt - nur die zwei Magnetventile 3 und 4 zu erkennen sind. Jedes Magnetventil 3 bis 4 trägt über ein Ventilgehäuse-Oberteil 23 bzw. 24 herausragende Kontaktelemente wie Kontaktstifte 25 bzw. 26, die dazu bestimmt sind, mit weiteren zugeordneten Kontaktelementen wie Kontaktbuchsen 19 bzw. 20 elektrische Verbindungen herzustellen. Anstelle von Kontaktstiften 25 und 26 können auch aus Flachmaterial hergestellte Kontaktmesser verwendet werden, wenn die die Kontaktmesser aufnehmenden Kontaktelemente entsprechend ausgebildet sind, beispielseise in Form von geschlitzten Buchsen, die die Kontaktmesser mit einem Teil von deren Breite in sich aufnehmen.

Im Ventilblock 2 sind mindestens zwei Ansatzschrauben 27 und 28 verankert, die einen zylindrischen Schraubenschaft 29 bzw. 30 haben. Um die Schraubenschäfte 29 bzw. 30 sind zwei hohlzylindrische Führungsansätze 31 und 32 einer vorzugsweise ganz aus Isolierstoff bestehenden Zwischenplatte 33 gleitbar angeordnet, und je eine zwischen dem Ventilblock 2 und den Führungsansätzen 31 und 32 liegende Druckfeder 34 bzw. 35 sorgt dafür, daß die Zwischenplatte 33 in demontiertem Zustand des Ventilblockaggregates 1 ihre maximale Höhenlage einnimmt, in der sie durch die Unterseite von Schraubenköpfen 36 und 37 der Ansatzschrauben 27 und 28 gehalten wird. In dieser Lage der Zwischenplatte 33 sind die Kontaktstifte 25 und 26 so von je einer Aufnahme 38 bzw. 39 der Zwischenplatte 33 abgedeckt, daß sie nicht herausstehen und deshalb nicht verbogen oder beschädigt werden können.

Wie die Figur 2 des weiteren erkennen läßt, trägt die Zwichenplatte 33 auch noch zwei Fixier- bzw. Ausrichtstifte 40 bzw. 41, die zum Eindringen in die Fixierlöcher 21 und 22 im Ventilblock-Deckel 5 bestimmt sind und die damit zum Vor-Ausrichten von Ventilblock-Deckel 5 und Ventilblock 2 bei der Montage dienen. Seitlich hat die Zwischenplatte 33 einen heruntergezogenen Rand 42, der sich neben eine hochgezogene Wand 43 des Ventilblocks 2 erstreckt

### Wirkungsweise

In den Figuren 1 und 2 ist das Ventilblockaggregat in demontiertem oder noch nicht montiertem Zustand dargestellt. Die Zwischenplatte 33 befindet sich dabei unter der Kraft der Federn 34 und 35 in ihrer obersten Stellung, in der sie die Kontaktstifte 25 und 26 schützend aufnimmt. Sie sind dadurch vor einem Verbiegen oder vor anderer Beschädigung gesichert.

Zur Montage des Ventilblock-Deckels 5 auf den Ventilblock 2 wird der Ventilblock-Deckel 5 mit seinem Bodenstück 9 so auf den Ventilblock 2 zu bewegt, daß die Fixierlöcher 21 und 22 im Bodenstück 9 die Ausrichtstifte 40 und 41 finden und aufnehmen. Bei weiterer Annäherung der beiden Teile 2 und 5 legt sich das Bodenstück 9 auf die Zwischenplatte 33 und der Ventilblock-Deckel 5 drückt dann die Zwischenplatte 33 gegen die Kraft der Federn 34 und 35 nach unten.

Dabei werden das Bodenstück 9 und die Zwischenplatte 33 gemeinsam verschoben. Schließlich erreichen bei dieser Bewegung die jetzt genau positionierten Kontaktstifte 25 und 26 die Kontaktbuchsen 19 und 20 und dringen leitungsverbindend in diese ein. Dadurch wird eine sichere Verbindung der elektrischen Leitungen gewährleistet. Aufgrund der Führung der Kontaktstifte 25 und 26 ist auch eine automatische Montage, wie sie bei einer Serienfertigung üblich ist, ohne weiteres möglich. Der Ventilblock-Deckel 5 braucht nur aufgelegt und nach unten gedrückt zu werden. An der Zwischenplatte 33 und/oder an dem Bodenstück 9 können Trichter 44 und 45 vorgesehen sein. Außerdem ist es in einer Alternativ-Ausführung natürlich auch möglich die Kontaktstifte 25 und 26 am Deckel 5 und die Kontaktbuchsen 19 und 20 am Ventilblock 2 vorzusehen. Die Zwischenplatte 33 muß dann allerdings am Ventilblock-Deckel 5 federnd aufgehängt werden. Anstelle der Kontaktstifte können aber auch wie bereits erwähnt Kontaktmesser oder dergleichen Kontaktelemente eingebaut werden.

Eine Weiterbildung von Aufnahmen, die sich an der Zwischenplatte 33 befinden, ist in der Figur 4 dargestellt. Dort besitzt eine Aufnahme 38a einen Einführungs-Trichter 46, der sich in Richtung zum jeweiligen Magnetventil 3 bzw. 4 öffnet. Solche Einführungs-Trichter 46 erleichtern das Einführen der Kontaktstifte 25, 26 beim Montieren der Zwischenplatte 33 unter Verwendung der Ansatzschrauben 27, 28.

## Patentansprüche

1. Ventilblockaggregat (1), insbesondere für Bremsdruckmodulationsvorrichtungen wie Antiblockier- oder Antriebsschlupfregelvorrichtungen, zusammengesetzt aus einem Ventilblock (2), in welchem mindestens ein elektromagnetisch betätigbares Hydraulikventil (3, 4) mit ersten Kontaktelementen (25, 26) zur elektrischen Verbindung angeordnet ist, und einem Ventilblock-Deckel (5), an dem zweite Kontaktelemente (19, 20) zum Zusammenstecken mit den ersten Kontaktelementen (25, 26) für eine elektrische Verbindung mit einem elektronischen Schaltgerät (6) angeordnet sind, dadurch gekennzeichnet, daß zwischen dem das oder die Magnetventile (3, 4) beinhaltenden Ventilblock (2) und dem Ventilblock-Deckel (5) eine Zwischenplatte (33) angeordnet ist, die mit Führungsöffnungen (38, 39) zum Durchtritt der ersten Kontaktelemente (25, 26) oder der zweiten Kontaktelemente (19, 20) versehen ist, daß die Zwischenplatte (33) längs der Zusammensteckrichtung der ersten und der zweiten Kontaktelemente (25, 26; 19, 20) beweglich geführt ist und der Kraft von Druckfedern (34, 35) unterliegt, daß die Druckfedern (34, 35) bestrebt sind, die Zwischenplatte (33) in einer Ausgangsstellung zu halten, in welcher die ersten oder die zweiten Kontaktelemente (25, 26; 19, 20) von den Führungsöffnungen (38, 39) der Zwischenplatte (33) geschützt aufgenommen sind, und daß in der fertig montierten Stellung von Ventilblock (2) und Ventilblock-Deckel (5) die Zwischenplatte (33) sich in einer die ersten oder die zweiten Kontaktelemente (25, 26; 19, 20) auf wenigstens einem Teil von deren Länge freigebenden Stellung befindet.

2. Ventilblockaggregat nach Anspruch 1, dadurch gekennzeichnet, daß die Zwischenplatte (33) durch Schraubenschäfte (29, 30) mehrerer Ansatzschrauben (27, 28) verschiebbar geführt ist.

3. Ventilblockaggregat nach einem der Ansprüche 1 bis 2, dadurch gekennzeichnet, daß den Führungsöffnungen (38, 39) der Zwischenplatte (33) zur Erleichterung von deren Vormontage Einführurgs-Trichter (46) zugeordnet sind zum Einstecken von Kontaktelementen (25, 26) in die Führungsöffnungen.

4. Ventilblockaggregat nach einem der Ansprüche 1 bis 4, dadurch gekennzeichnet, daß die Zwischenplatte (33) aus Isolierstoff besteht.

5. Ventilblockaggregat nach Anspruch 2, dadurch gekennzeichnet, daß die ersten Kontaktelemente (25, 26), die im wesentlichen stiftartig ausgebildet sind, und die Ansatzschrauben (27, 28) an dem die Magnetventile (3, 4) aufnehmenden Ventilblock (2) und die zugeordneten zweiten Kontaktelemente (19, 20) an dem Ventilblock-Deckel (5) angeordnet sind.

6. Ventilblockaggregat nach Anspruch 2, dadurch gekennzeichnet, daß die ersten Kontaktelemente (25, 26), die im wesentlichen stiftartig ausgebildet sind, und die Ansatzschrauben (27,28) an dem Ventilblock-Deckel (5) und die zugeordneten zweiten Kontaktelemente (19, 20) an dem die Magnetventile (3, 4) aufnehmenden Ventilblock (2) angeordnet sind.

7. Ventilblockaggregat nach einem der Ansprüche 1 bis 3, dadurch gekennzeichnet, daß die zweiten Kontaktelemente (19, 20) elektrisch mit einer elektrischen Leiterplatte (8) verbunden sind.

8. Ventilblockaggregat nach Anspruch 8, dadurch gekennzeichnet, daß weitere elektrische Bauteile (11, 12) mit der elektrischen Leiterplatte (8) elektrisch verbunden sind.

## Claims

1. Valve block assembly (1), especially for brake-pressure modulating devices, such as anti-lock or traction regulating devices, composed of a valve block (2), in which at least one electromagnetically actuable hydraulic valve (3, 4) with first contact elements (25, 26) for electrical connection is arranged, and of a valve-block cover (5), on which second contact elements (19, 20) are arranged in order to be plugged together with the first contact elements (25, 26) for electrical connection to an electronic switch unit (6), characterized in that there is arranged between the valve block (2) containing the solenoid valve or solenoid valves (3, 4) and the valve-block cover (5) an intermediate plate (33) which is provided with guide orifices (38, 39) for the passage of the first contact elements (25, 26) or of the second contact elements (19, 20), in that the intermediate plate (33) is guided movably in the direction of plugging together of the first and second contact elements (25, 26; 19, 20) and is subjected to the force of compression springs (34, 35), in that the compression springs (34, 35) endeavour to hold the intermediate plate (33) in an initial position, in which the first or the second contact elements (25, 26; 19, 20) are received in a protected manner by the guide orifices (38, 39) of the intermediate plate (33), and in that, in the ready-mounted position of the valve block (2) and valve-block cover (5), the intermediate plate (33) is in a position exposing the first or the second contact elements (25, 26; 19, 20) on at least part of their length.

2. Valve block assembly according to Claim 1, characterized in that the intermediate plate (33) is guided displaceably by screw shanks (29, 30) of a plurality of shoulder screws (27, 28).

3. Valve block assembly according to one of Claims 1 and 2, characterized in that, to make it easier to premount the intermediate plate (33), the guide orifices (38, 39) of the latter are assigned introduction funnels (46) for the insertion of contact elements (25, 26) into the guide orifices.

4. Valve block assembly according to one of Claims 1 to 3, characterized in that the intermediate plate (33) consists of insulating material.

5. Valve block assembly according to Claim 2, characterized in that the first contact elements (25, 26) are made essentially pin-like, and the shoulder screws (27, 28) are arranged on the valve block (2) receiving the solenoid valves (3, 4) and the associated second contact elements (19, 20) are arranged on the valve-block cover (5).

6. Valve block assembly according to Claim 2, characterized in that the first contact elements (25, 26) are made pin-like, and the shoulder screws (27, 28) are arranged on the valve-block cover (5) and the associated second contact elements (19, 20) are arranged on the valve block (2) receiving the solenoid valves (3, 4).

7. Valve block assembly according to one of Claims 1 to 3, characterized in that the second contact elements (19, 20) are connected electrically to an electric circuit board (8).

8. Valve block assembly according to Claim 7, characterized in that further electrical components (11, 12) are connected electrically to the electrical circuit board (8).

## Revendications

1. Ensemble de bloc de soupapes (1), en particulier pour des dispositifs de modulation de la pression de freinage tels que des dispositifs de régulation d'antiblocage ou d'antipatinage, se composant d'un bloc de soupapes (2), dans lequel est disposée au moins une soupape hydraulique (3, 4) qui peut être actionné électromagnétiquement avec un premier élément de contact (25, 26) servant de liaison électrique, et d'un couvercle de bloc de soupapes (5) sur lequel est disposé un deuxième élément de contact (19, 20) à connecter au premier élément de contact (25, 26) pour établir une liaison électrique avec un appareil électronique de branchement (6),
caractérisé en ce que
entre le bloc de soupapes (2), contenant la ou les soupapes (3, 4) et le couvercle de bloc de soupapes (5) on dispose une plaque intermédiaire (33), qui est pourvue d'orifices de guidage (38, 39) servant au passage du premier élément de contact (25, 26) ou du second élément de contact (19, 20), en ce que la plaque intermédiaire (33) se déplace le long de la direction d'embrochage du premier et du second élément de contact (25, 26 ; 19, 20) et est soumise à la force de ressorts de compression (34, 35), en ce que les ressorts de compression (34, 35) ont tendance à maintenir la plaque intermédiaire (33) dans une position de départ, dans laquelle le premier ou le second élément de contact (25, 26 ; 19, 20) est reçu, en étant protégé, par les orifices de guidage (38, 39) de la plaque intermédiaire (33) et en ce que, quand le bloc de soupapes (2) est dans sa position complètement montée ainsi que le couvercle du bloc de soupapes (5), la plaque intermédiaire (33) se trouve dans une position qui libère le premier élément de contact ou le second élément de contact (25, 26 ; 19, 20) au moins sur une partie de leur longueur.

2. Ensemble de bloc de soupapes selon la revendication 1,
caractérisé en ce que
la plaque intermédiaire (33) est guidée en pouvant coulisser par des tiges filetées (29, 30) de plusieurs vis à épaulement (27, 28).

3. Ensemble de blocs de soupapes selon l'une des revendications 1 à 2,
caractérisé en ce qu'
on associe aux orifices de guidage (38, 39) de la plaque intermédiaire (33) des entonnoirs d'introduction (46) servant à faciliter leur prémontage pour enfoncer des éléments de contact (25, 26) dans les orifices de guidage.

4. Ensemble de bloc de soupapes selon l'une des revendications 1 à 3,
caractérisé en ce que
la plaque intermédiaire (33) est en une matière isolante.

5. Ensemble de bloc de soupapes selon la revendication 2,
caractérisé en ce que
les premiers éléments de contact (25, 26) qui sont constitués essentiellement à la manière de tiges et les vis à épaulement (27, 28), sont disposées sur le bloc de soupapes (2) qui reçoit les soupapes électromagnétiques (3, 4) et les seconds éléments de contact (19, 20) correspondants sont disposés sur le couvercle du bloc de soupapes (5).

6. Ensemble de bloc de soupapes selon la revendication 2,
caractérisé en ce que les premiers éléments de contact (25, 26), qui sont constitués essentiellement sous la forme de tiges et les vis à épaulement (27, 28), sont disposés sur le couvercle du bloc de soupapes (5) et les seconds éléments de contact correspondants (19, 20) sont disposés sur le bloc de soupapes (2) qui reçoit les soupapes électromagnétiques (3, 4).

7. Ensemble de bloc de soupapes selon l'une des revendications 1 à 3
caractérisé en ce que
les seconds éléments de contact (19, 20) sont reliés électriquement à une carte de circuits imprimés électrique (8).

8. Ensemble de bloc de soupapes selon la revendication 7,
caractérisé en ce que
d'autres composants électriques (11, 12) sont reliés à la carte de circuits imprimés électrique (8).
